# EUROPEAN PATENT SPECIFICATION

(11) **EP 3 619 107 B1**
(45) Date of publication and mention of the grant of the patent: **10.08.2022**
(21) Application number: 18793983.0
(22) Date of filing: 30.04.2018
(51) Int. Cl.: B64C 1/14

(54) **A BODY STRUCTURE OF A VEHICLE COMPRISING A DOOR STRUCTURE AND A MODULAR LOCKING MECHANISM**
KAROSSERIESTRUKTUR EINES FAHRZEUGS MIT EINER TÜRSTRUKTUR UND EINEM MODULAREN VERRIEGELUNGSMECHANISMUS
STRUCTURE DE CARROSSERIE D'UN VÉHICULE COMPRENANT UNE STRUCTURE DE PORTE ET UN MÉCANISME DE VERROUILLAGE MODULAIRE

(30) Priority: 02.05.2017 SE 1750527
(43) Date of publication of application: 11.03.2020
(73) Proprietor: SAAB AB, 581 88 Linköping (SE)
(72) Inventor: BARRKLEV, Mattias, 586 63 Linköping (SE)
(74) Representative: Zacco Sweden AB
(86) International application number: PCT/SE2018/050441
(87) International publication number: WO 2018/203805

(56) References cited:
- EP-A2- 0 259 886
- EP-A2- 1 270 405
- GB-A- 2 511 159
- GB-A- 2 511 159
- US-A- 3 296 742
- US-A- 4 395 000
- US-A- 4 395 000
- US-A- 4 887 490
- US-A- 4 887 490
- US-A1- 2009 113 954
- US-A1- 2017 089 106

## Description

### TECHNICAL FIELD

The present invention relates to an aircraft fuselage structure of an aircraft and a door structure according to the premble of claim 1. The locking mechanism may be modular.

The present invention concerns the industry manufacturing such body structures comprising a door structure and manufactures producing locking mechanisms configured for such body structures.

The invention is not limited thereto, but can be adapted for application of a wide range of different types industries.

### BACKGROUND ART

There is a desire to provide a body structure of a vehicle, comprising a door structure that is of low weight and which provides safe handling of the door in regard to closing and opening the door.

There is also a desire to provide a modular latch fitting locking device of a body structure that promotes cost-efficient manufacture of a vehicle.

There is also a desire to provide a vehicle of low weight.

Current technology as published uses latch fitting locking devices with movable latch members and actuator arrangements mounted to the door per se for locking the door in closed position to the body structure. This may imply overweight and use of over-dimension materials and unsafe handling in opening and closing the door.

Prior art locking mechanisms for doors in vehicles (such as aircraft) are designed with movable latch member and actuators for moving the movable latch member. The moving parts and actuators and surrounding equipment are today arranged within the door. Prior art aircraft cargo/passenger doors of aircraft are provided with latch and linkage arrangements. This requires strengthening of the door structure which makes the door heavy. The current latch mechanism arranged in the door furthermore makes it heavy and thereby a high opening force for opening the door is needed.

UK2511159 shows securing a hinged access panel of an aircraft. A fastening system may be located within the aircraft whose panel is fastened by the system. A shaft with locking hooks is arranged in brackets attached to the fuselage. The locking hooks hook onto a crossbar of the panel for securing the panel to the aircraft fuselage.

US 4395000 shows a latch and lock mechanism for an aircraft fuselage door assembly having an inwardly opening plug-type part. The latch is coupled to latch actuator rods for moving the latch between a latched and a closed position. The door assembly has a mechanical interlock between the door parts configured in such way that the door cannot be inadvertently closed.

### SUMMARY OF THE INVENTION

An object of the present invention is to provide a body structure of a vehicle, comprising a door structure which is of low weight and which has a locking mechanism that is easy to mount and maintain in service.

An object of the present invention is to develop a body structure of a vehicle, comprising a door structure, wherein the door structure and finished door will have low weight.

One aspect is to provide a body structure of an aircraft or other aerial vehicles, vessels or lorries or other vehicles etc.

The vehicle may be an aircraft or a helicopter or other aerial vehicle.

An object is to ensure that the latching of the aircraft door is not possible until the aircraft door is closed.

An object is to provide an aerial vehicle comprising an aerial vehicle door latch fitting securing device, that is of low weight and that is less bulky than prior art latch fitting securing devices.

At least one of said objects has been achieved by an aircraft fuselage structure according to claim 1. Preferred embodiments are defined in the dependent claims.

### BRIEF DESCRIPTION OF THE DRAWINGS

The present invention will now be described by way of examples with references to the accompanying schematic drawings, of which:
Fig. 1 illustrates a body structure of a vehicle, comprising a door structure, according to a first example, not according to the claimed invention;
Fig. 2 illustrates a body structure of a vehicle, comprising a door structure, according to a second example;
Fig. 3 illustrates a body structure of a vehicle, comprising a door structure, according to a third example;
Fig. 4 illustrates a body structure of a vehicle, comprising a door structure, according to a fourth example;
Fig. 5 illustrates a body structure of a vehicle, comprising a door structure, according to a fifth example;
Fig. 6 illustrates a body structure of a vehicle, comprising a door structure, according to a sixth example;
Fig. 7 illustrates a body structure of a vehicle, comprising a door structure, according to a seventh example;
Fig. 8 illustrates a body structure of a vehicle, comprising a door structure, according to an eight example, not according to the claimed invention;
Fig. 9 illustrates a locking mechanism of a vehicle according to a ninth example;
Figs. 10a -10d illustrate different examples of door structures of an aircraft;
Figs. 11a and 11b illustrate flowcharts showing exemplary methods not being claimed for mounting a modular latch fitting locking device;
Figs. 12a and 12b illustrate an exemplary method of adjusting a modular latch fitting locking device and prefabricated aircraft door, not according to the claimed invention;
Fig. 13 illustrates an aircraft assembly line, not being claimed, comprising prefabricated aircraft doors and modular latch fitting locking devices;
Fig. 14 illustrates a body structure comprising a first actuator arrangement according to one example;
Fig. 15 illustrates an interlock arrangement of a body structure according to one example; and
Fig. 16 illustrates a further example of a body structure comprising a latch fitting locking device.

### DETAILED DESCRIPTION

Hereinafter, exemplary embodiments of the present invention will be described with reference to the accompanying drawings, wherein for the sake of clarity and understanding of the invention some details of no importance may be deleted from the drawings. Some details may have same reference but may belong to different examples and may feature a different configuration.

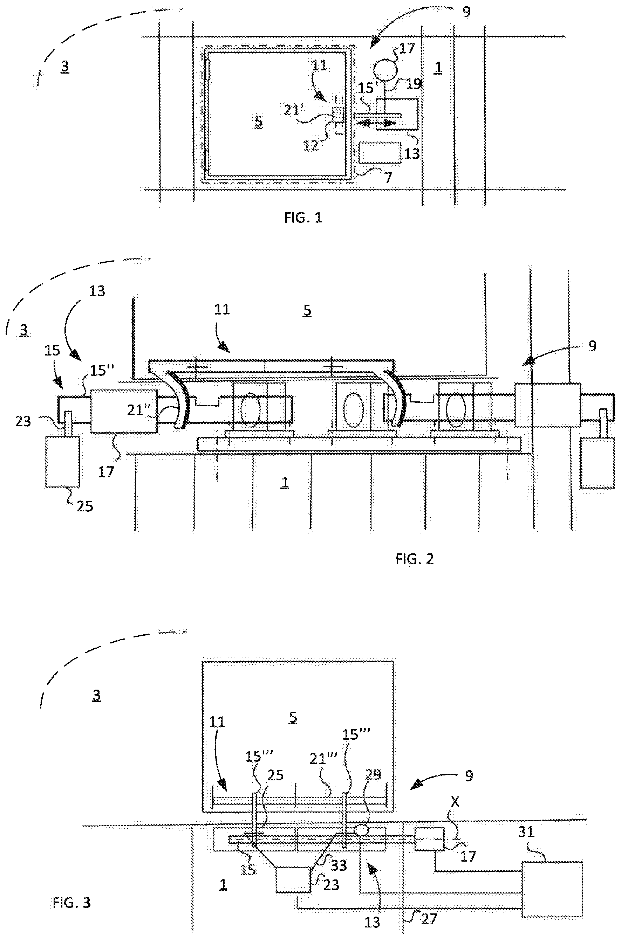

Fig. 1 illustrates a body structure 1 (partly shown) of a vehicle 3 (partly shown) not according to the claimed invention. The vehicle 3 comprises a door structure 5. An interface 7 is defined between the body structure 1 and the door structure 5. The door structure 5 is configured to be opened or closed when the vehicle 3 stands still. A locking mechanism 9 is arranged for locking the door structure 5 to the body structure 1 in a locked state. The locking mechanism 9 comprises a stationary latch fitting arrangement 11, which is mounted to the door structure 5. The locking mechanism 9 further comprises a latch fitting locking device 13. The latch fitting locking device 13 comprises a movable latch member 15'. The movable latch member 15' is configured to be moved by a first actuator arrangement 17. The first actuator arrangement 17 is provided to move and make engagement of the movable latch member 15' to the stationary latch fitting 11. The first actuator arrangement 17 is coupled to the latch fitting locking device 13 and the movable latch member 15' (e. g. a latch pin) via a drive link 19 mounted to the body structure 1. The latch fitting locking device 13, comprising the movable latch member 15', and the first actuator arrangement 17 are mounted to the body structure 1. The stationary latch fitting arrangement 11 comprises a stationary latch fitting 12. The stationary latch fitting 12 comprises a through hole 21' configured to be engaged by the movable latch member 15' in the locked state for latching action.

The movable latch member 15' may be configured to be secured in the locked state by a movable lock member (not shown). The movable lock member may be configured to be moved by a second actuator arrangement (not shown) for engagement with and locking the movable latch member 15'. Also the movable lock member may be mounted to the body structure 1.

Fig. 2 illustrates a body structure 1 (partly shown) of a vehicle 3 (partly shown). The vehicle 3 comprises a door structure 5. A locking mechanism 9 is arranged for locking the door structure 5 to the body structure 1 in a locked state. The locking mechanism 9 comprises a stationary latch fitting arrangement 11, which is mounted to the door structure 5. The locking mechanism 9 further comprises a latch fitting locking device 13, which comprises a movable latch member 15 being mounted to the body structure 1. The movable latch member 15 is configured to be moved by an actuator arrangement 17, also being mounted to the body structure 1, so that the movable latch member 15 will engage a stationary hook member 21" of the stationary latch fitting arrangement 11 in the locked state. The movable latch member 15 (laterally moveable latch bar member 15") is configured to be secured in the locked state by a movable lock member 23. The movable lock member 23 is configured to be moved by a second actuator arrangement 25 for engagement with and locking the movable latch member 15. Also the movable lock member 23 is mounted to the body structure 1.

The latch fitting locking device 13 may be a modular latch fitting locking device comprising at least one modular movable latch member, which is detachable mounted to the modular latch fitting locking device.

The laterally moveable latch bar member is journaled in a journal bearing structure and may be configured for sliding motion along a first axis corresponding with the flight direction of the aircraft.

The latch fitting locking device 13 may be positioned at the lower region of an aperture perimeter below an aperture (aircraft door opening) and thus extends along the prolongation of the fuselage structure below the aperture.

A door sill structure is mounted adjacent and below the aperture for strengthening the fuselage structure around the aperture and thus the fuselage structure below the aperture.

The door sill structure comprises the journal bearing structure and also the laterally moveable latch bar member.

It has been shown that major weight can be saved by designing the door sill structure in such a way that the door sill structure also comprises the latch fitting locking device 13 (entirely or parts thereof). It has been shown that especially the laterally moveable latch bar member, thus extending in the prolongation of the fuselage structure, will strengthening the door sill structure.

In such way the door sill structure per se can be made lighter than prior art door sill structures, at the same time as there is provided a latch fitting locking device for latching the door structure to the fuselage structure.

The door structure 5 is thus configured to be latched and locked (i.e. secured) to the fuselage structure. Weight is saved in designing the door sill structure by adding additional strength to the door sill structure by means of the mounting of the attached laterally moveable latch bar member to the door sill structure. The door sill structure can thus be made lighter, taking into account that also the laterally moveable latch bar member and/or the journal bearing structure having structural properties.

Fig. 3 illustrates a body structure 1 (partly shown) of a vehicle 3 (partly shown). The vehicle 3 comprises a door structure 5. A locking mechanism 9 is arranged for locking the door structure 5 to the body structure 1 in a locked state. The locking mechanism 9 comprises a stationary latch fitting arrangement 11, which is mounted to the door structure 5. The stationary latch fitting arrangement 11 is configured as a bar member 21‴ or a tube member. The locking mechanism 9 further comprises a latch fitting locking device 13 arranged at the body structure 1 and which comprises a movable latch member 15 also being mounted to the body structure 1. The movable latch member 15 is configured to be rotated by an actuator arrangement 17, also being mounted to the body structure 1, but at the other side of a bulkhead 27 of the body structure 1. The movable latch member 15 is arranged rotatably around an axis X. The movable latch member 15 is rigidly coupled to two hook members 15‴. Upon rotation of the movable latch member 15 the two hook members 15‴ will swing to latch or unlatch the stationary latch fitting arrangement 11. A sensor arrangement 29 is mounted to the body structure 1 and being configured to detect the locked state wherein the locking mechanism 9 is locked. The sensor arrangement 29 is associated with the movable latch member 15 for detecting the position of the movable latch member 15. The sensor arrangement 29 is coupled to an electrical circuit 31, which in turn is coupled to an indicator of an instrument panel (not shown). The sensor arrangement 29 is entirely mounted to the body structure 1. The sensor arrangement 29 may comprise a Hall effect sensor. The electrical circuit 31 is coupled also to the actuator arrangement 17 for controlling the motion of the movable latch member 15. The electrical circuit 31 is coupled also to a movable lock member 23 comprising locking fingers 33.

The latch fitting locking device 13 may be a modular latch fitting locking device comprising at least one modular movable latch member, which is detachable mounted to the modular latch fitting locking device.

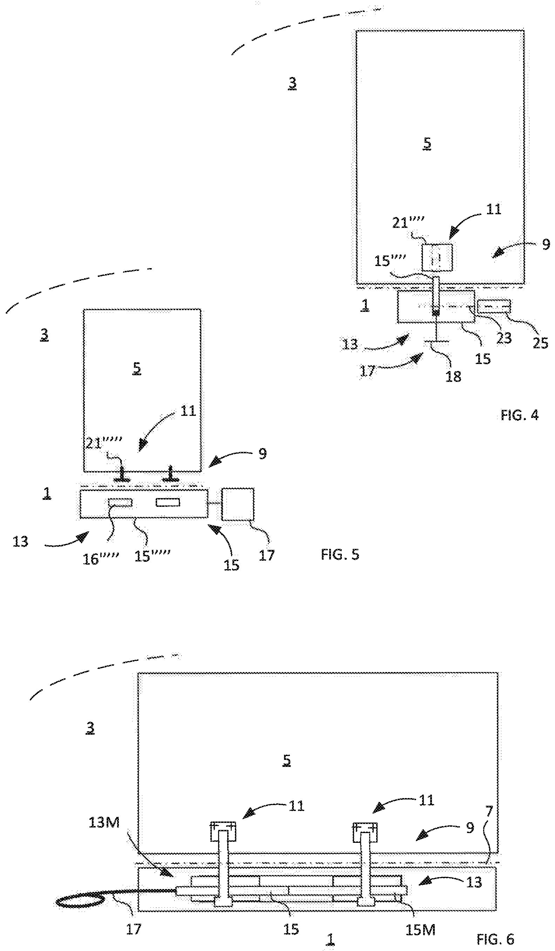

Fig. 4 illustrates a body structure 1 (partly shown) of a vehicle 3 (partly shown). A locking mechanism 9 is arranged for locking a door structure 5 to the body structure 1. The locking mechanism 9 comprises a stationary latch fitting arrangement 11, which is mounted to the door structure 5. The stationary latch fitting arrangement 11 is configured as a bracket 21"" comprising a latch recess configured to be engaged by a movable latch peg member 15"" of a latch member 15 of a latch fitting locking device 13. The latch member 15 and the latch fitting locking device 13 are mounted to the body structure 1. The movable latch peg member 15"" of the latch member 15 is configured to be moved by a manual actuator arrangement 17 comprising a handle 18. The manual actuator arrangement 17 is mounted to the body structure 1.

The latch fitting locking device 13 may be a modular latch fitting locking device comprising at least one modular movable latch member, which is detachable mounted to the modular latch fitting locking device.

The movable latch peg member 15"" of the latch member 15 may be configured to be secured in the locked state by a movable lock member 23 configured to be moved by a second actuator arrangement 25.

Fig. 5 illustrates a body structure 1 (partly shown) of a vehicle 3 (partly shown). A locking mechanism 9 is arranged for locking a door structure 5 to the body structure 1. The locking mechanism 9 comprises a stationary latch fitting arrangement 11, which is mounted to the door structure 5.The stationary latch fitting arrangement 11 is configured as two T-pins 21ʺ‴. The locking mechanism 9 further comprises a latch fitting locking device 13 arranged at the body structure 1 and which comprises a movable latch member 15 also being mounted to the body structure 1. The movable latch member 15 is formed as an elongated latch tube member 15ʺ‴. The latch tube member 15ʺ‴ is configured to be rotated by an actuator arrangement 17, also being mounted to the body structure 1, so that the two T-pins 21ʺ‴ will engage a respective latch recess 16ʺ‴ for latching action, when the door is closed.

The latch fitting locking device 13 may be a modular latch fitting locking device comprising at least one modular movable latch member, which is detachable mounted to the modular latch fitting locking device.

The movable latch member 15 may be configured to be secured in the locked state by a movable lock member (not shown). The movable lock member may be configured to be moved by a second actuator arrangement (not shown) for engagement with and locking the movable latch member. Also the movable lock member may be mounted to the body structure 1.

Fig. 6 illustrates a body structure 1 (partly shown) of a vehicle 3 (partly shown). A locking mechanism 9 is arranged for locking a door structure 5 to the body structure 1. The locking mechanism 9 comprises a stationary latch fitting arrangement 11, which is mounted to the door structure 5. The locking mechanism 9 further comprises a latch fitting locking device 13 arranged on the body structure 1. The latch fitting locking device 13 comprises a movable latch member 15 also being mounted to the body structure 1. The movable latch member 15 is configured to be moved by a manual actuator arrangement 17.

The movable latch member 15 may be configured to be secured in the locked state by a movable lock member (not shown). The movable lock member may be configured to be moved by a second actuator arrangement (not shown) for engagement with and locking the movable latch member. Also the movable lock member may be mounted to the body structure 1.

The latch fitting locking device 13 may be a modular latch fitting locking device 13M comprising at least one modular movable latch member 15M, which is detachable mounted to the modular latch fitting locking device 13M.

The laterally moveable latch bar member or movable latch member 15 is journaled in a journal bearing structure and may be configured for sliding motion along a first axis corresponding with the flight direction of the aircraft.

The latch fitting locking device is positioned at the lower region of the aperture perimeter below the aperture (aircraft door) and thus extends along the prolongation of the fuselage structure below the aperture.

A door sill structure is mounted adjacent and below the aperture for strengthening the fuselage structure around the aperture and thus the fuselage structure below the aperture.

The door sill structure comprises the journal bearing structure and also the laterally moveable latch bar member.

The laterally moveable latch bar member may be positioned for and may be configured for sliding motion in the journal bearing structure.

It has been shown that major weight can be saved by designing the door sill structure in such a way that the door sill structure also comprises the latch fitting locking device 13 (entirely or parts thereof). It has been shown that especially the laterally moveable latch bar member, thus extending in the prolongation of the fuselage structure, will strengthening the door sill structure.

In such way the door sill structure per se can be made lighter than prior art door sill structures, at the same time as there is provided a latch fitting locking device for latching the door structure to the fuselage structure.

The door structure is thus configured to be latched and locked (i.e. secured) to the fuselage structure. Weight is saved in designing the door sill structure by adding additional strength to the door sill structure by means of the mounting of the attached laterally moveable latch bar member to the door sill structure. The door sill structure can thus be made lighter, taking into account that also the laterally moveable latch bar member and/or the journal bearing structure being structural.

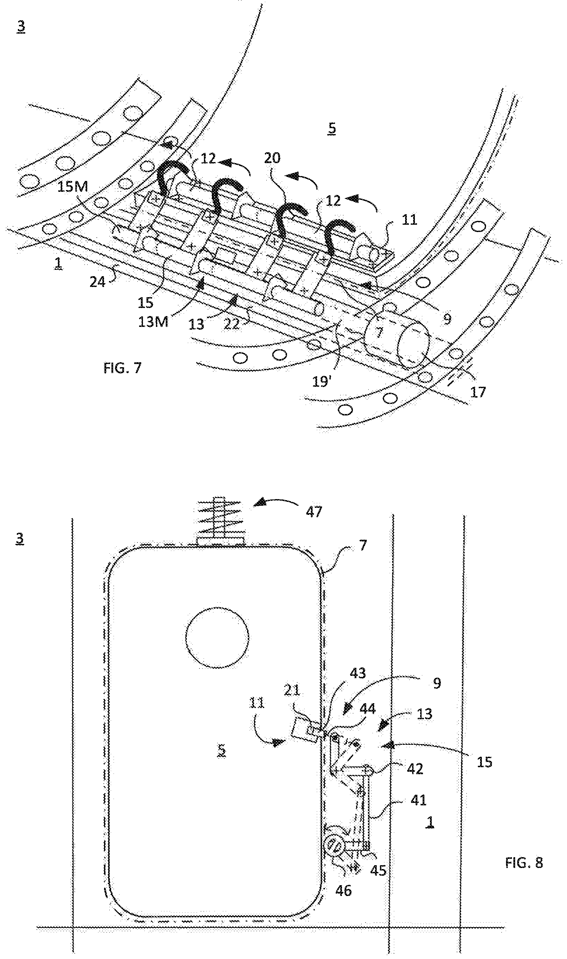

Fig. 7 illustrates a body structure 1 (partly shown) of a vehicle 3 (partly shown). A locking mechanism 9 is arranged for locking a door structure 5 to the body structure 1. The locking mechanism 9 comprises a stationary latch fitting arrangement 11, which is mounted to the door structure 5. The stationary latch fitting arrangement 11 comprises two stationary latch fitting tube 12 which may be modular configured and arranged to the door structure 5. The locking mechanism 9 further comprises a latch fitting locking device 13 arranged to the body structure 1. The latch fitting locking device 13 comprises a movable latch member 15 also being mounted to the body structure 1. Four hooks 20 are arranged to the movable latch member 15 and are configured to engage the stationary latch fitting tube 12. The movable latch member 15 is configured to be rotated by an actuator arrangement 17, also being mounted to the body structure 1, so that the four hooks 20 are able to engage the stationary latch fitting tubes 12 for latching action. A drive shaft 19' is coupled between the actuator arrangement 17 and the movable latch member 15.

The latch fitting locking device 13 may be a modular latch fitting locking device 13M comprising at least one modular movable latch member 15M, which is detachable mounted to the modular latch fitting locking device 15M.

The movable latch member 15 may be configured to be secured in the locked state by a movable lock member (not shown). The movable lock member may be configured to be moved by a second actuator arrangement (not shown) for engagement with and locking the movable latch member. Also the movable lock member may be mounted to the body structure 1.

The locking mechanism 9 may comprise a modular stationary latch fitting arrangement, which in turn comprises at least one modular and detachable mounted modular stationary latch fitting for example the two stationary latch fitting tubes 12.

Preferably, the modular movable latch member 15M is mounted on a modular frame or beam 22 (which also may be modular) configured to hold the modular movable latch member 15 and permitting motion (e.g. rotation) of the modular movable latch member 15 relative the beam 22.

The hooks 20 and other modular units may in turn be configured to be detachable mounted to the modular latch fitting locking device.

Fig. 8 illustrates a body structure 1 (partly shown) of a vehicle 3 (partly shown) not according to the claimed invention. A locking mechanism 9 is arranged for locking a door structure 5 to the body structure 1. The locking mechanism 9 comprises a stationary latch fitting arrangement 11, which is mounted to the door structure 5. An interface 7 is defined between the body structure 1 and the door structure 5. The stationary latch fitting arrangement 11 comprises a stationary bolt stop recess 21. The stationary latch fitting arrangement 11 and the stationary bolt stop recess 21 are mounted to the door structure 5.

The locking mechanism 9 further comprises a latch fitting locking device 13 arranged to the body structure 1. The latch fitting locking device 13 comprises a movable latch member 15 also being mounted to the body structure 1. The movable latch member comprises a link arm 41 coupled to a bell crank 42, which is coupled to a bolt stop 43 via a linkage member 44. The link arm 41 is coupled to a lever 45 of a turnable handle 46. When a user (not shown) rotates the handle 46 it will move the lever 45, which in turn translate a motion to the bell crank 42 via the link arm 41. The bell crank 42 thus moves the bolt stop 43 into the bolt stop recess 21 of the stationary latch fitting arrangement 11 for locking action. A spring arrangement 47 is arranged in the body structure 1 and being associated with the door structure 5 for pushing the door from the body structure in the case of opening the door. The weight of the door can be reduced by the positioning of the latch fitting locking device 13 in the body structure 1, which means that the spring arrangement 47 can be made with less spring force and thus lighter and less bulky requiring less reinforcing structure, which will save weight of the vehicle.

The latch fitting locking device 13 may be a modular latch fitting locking device comprising at least one modular movable latch member, which is detachable mounted to the modular latch fitting locking device.

The movable latch member 15 may be configured to be secured in the locked state by a movable lock member (not shown). The movable lock member may be configured to be moved by a second actuator arrangement (not shown) for engagement with and locking the movable latch member. Also the movable lock member may be mounted to the body structure 1.

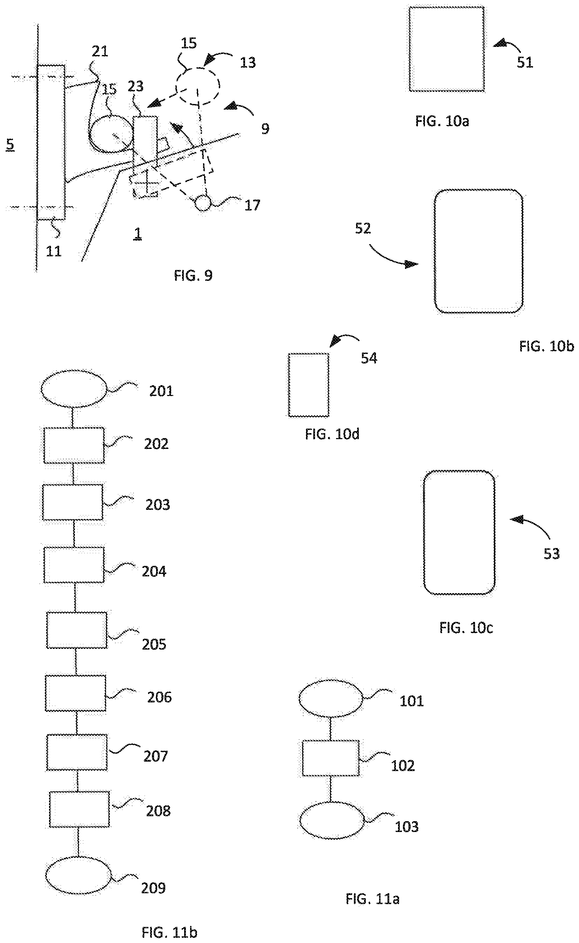

Fig. 9 illustrates a locking mechanism 9 of a vehicle (not shown) according to a ninth example. The locking mechanism 9 is arranged for locking a door structure 5 to a body structure 1. The locking mechanism 9 comprises a stationary latch fitting arrangement 11, which is mounted to the door structure 5. The locking mechanism 9 further comprises a latch fitting locking device 13 arranged to the body structure 1. The latch fitting locking device 13 comprises a movable latch member 15 also being mounted to the body structure 1. The movable latch member 15 configured to be moved by means of an actuator arrangement 17 to a latching position for engagement with a hook 21 of the stationary latch fitting arrangement 11. The movable latch member 15 is configured to be secured in the locked state by a movable lock member 23. The movable lock member 23 is configured to be moved by a second actuator arrangement (not shown) for engagement with and locking the movable latch member 15.

Figs. 10a - 10d illustrate different examples of door structures of an aircraft. Fig. 10a illustrates a container cargo door 51. Fig. 10b illustrates a crew entrance door 52 not according to the claimed invention and Fig. 10c illustrates a crew escape door 53 not according to the claimed invention.

Fig. 10d illustrates a passenger door 54 not according to the claimed invention. Figs. 11a and 11b illustrate flowcharts showing exemplary methods not being claimed for mounting a modular latch fitting locking device to a body structure of a vehicle. The modular latch fitting locking device comprises at least one modular movable latch member coupled and configured to be moved by a first actuator arrangement configured to transfer a motion from the first actuator arrangement to the at least one modular movable latch member for providing engagement of the at least one modular movable latch member to at least one stationary latch fitting arrangement of a door structure of the vehicle (see e.g. Fig. 7).

Fig. 11a illustrates that the method e.g. starts in Step 101. In Step 102 the method is performed. In step 103 the method stops. Step 102 involves mounting of a modular latch fitting locking device to a body structure of a vehicle, the modular latch fitting locking device comprises at least one modular movable latch member coupled and configured to be moved by a first actuator arrangement configured to transfer a motion from the first actuator arrangement to the at least one modular movable latch member for providing engagement of the at least one modular movable latch member to at least one stationary latch fitting arrangement of a door structure of the vehicle.

The method in step 102 may comprise: Providing the body structure; mounting the modular latch fitting locking device to the body structure; mounting the door structure to the body structure; closing the door structure; and locking the at least one stationary latch fitting arrangement of the door structure to the at least one modular movable latch member.

Fig. 11b illustrates that the method e.g. starts in Step 201. In Step 202 there is provided a body structure. In step 203 mounting of the modular latch fitting locking device to the body structure is made. Mounting of the door structure to the body structure is performed in step 204. Closing the door structure is made in step 205. Locking of the at least one stationary latch fitting arrangement of the door structure to the at least one modular movable latch member is performed in step 206.

Optionally, an additional step 207 of adjusting the modular latch fitting locking device is made after the step 206 comprising said locking.

Optionally, the step 204 of mounting the door structure to the body structure is followed by an additional step 208 of adjusting a hinge arrangement to which the door structure is mounted. In step 209 the method stops.

Optionally, the step 206 of said locking of the stationary latch fitting arrangement is performed manually or by means of the first actuator arrangement.

Optionally, the step of adjusting 207 the modular latch fitting locking device is performed by means of an adjusting arrangement.

Preferably, there is provided a method of mounting the door structure in an assembly jig for adjustment of the modular latch fitting locking device.

The method may comprise the steps of: Mounting the door structure comprising the stationary latch fitting arrangement to an assembly jig; mounting the modular latch fitting locking device to the assembly jig; closing the door structure in the assembly jig permitting that the movable latch member of the latch fitting locking device is able to engage the stationary latch fitting; adjusting the modular latch fitting locking device for providing a pre-determined locked state of the stationary latch fitting arrangement when the stationary latch fitting arrangement has been locked to the modular movable latch member.

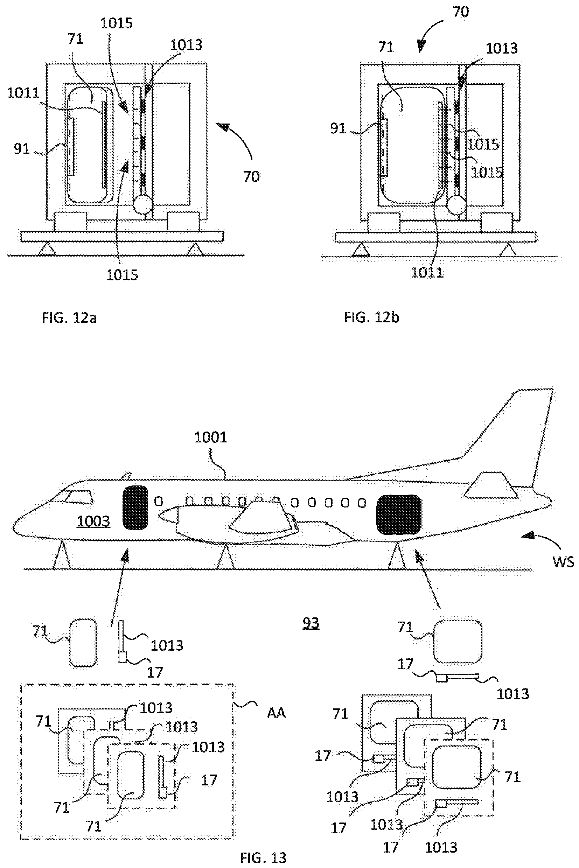

Figs. 12a - 12b illustrate an "aircraft door- modular latch fitting locking device" assembly jig 70 not according to the claimed invention. An aircraft door 71 and a modular latch fitting locking device 1013 have been mounted to the assembly jig 70, as shown in Fig. 12a. The modular latch fitting locking device 1013 comprises a set of modular movable latch members 1015. The aircraft door 71, the modular latch fitting locking device 1013 and the set of modular movable latch members 1015 are to be mounted to an aircraft fuselage (body) structure 1001 (see Fig. 13). A modular stationary latch fitting arrangement 1011 (preferably being adjustable before fixation of a bar) is mounted to the aircraft door 71 configured for engagement with the set of modular movable latch members 1015. The modular latch fitting locking device 1013 and the aircraft door 71 are positioned in the assembly jig 70 in mutual relationship corresponding with that of the actual relation they will have in the aircraft fuselage (body) structure 1001 in the aircraft assembly line. In Fig 12b is shown that the aircraft door 71 has been "closed" in the assembly jig 70. Workshop personnel (not shown) have closed the aircraft door 71 in the assembly jig 70 permitting that the modular movable latch members 1015 of the modular latch fitting locking device 1013 are able to engage the modular stationary latch fitting arrangement 1011. The workshop personnel thereafter will adjust the modular latch fitting locking device 1013 for providing a pre-determined locked state of the modular stationary latch fitting arrangement 1011 relative the modular latch fitting locking device 1013. This is for providing a proper relationship between the modular latch fitting locking device 1013 and the modular stationary latch fitting arrangement 1011 of the aircraft door 71. The modular movable latch members 1015 may be adjusted as well for proving a correct interrelation between the modular stationary latch fitting arrangement 1011 of the aircraft door 71 and the modular latch fitting locking device 1013.

The mounting the door structure to the body structure is preferably followed by an additional step of adjusting a hinge arrangement 91 to which the aircraft door 71 is mounted. This method step may also be performed when mounting the aircraft door 71 to the aircraft fuselage (body) structure 1001 in Fig. 13.

The step of adjusting the modular latch fitting locking device may be performed by shimming and the positioning of shims between the modular latch fitting locking device 1013 and the aircraft fuselage (body) structure.

The step of adjusting the modular latch fitting locking device may be performed by the positioning of serrated plates between the modular latch fitting locking device 1013 and the aircraft fuselage (body) structure.

Suitably, method steps are performed in order or in arbitrary order.

This "aircraft door- modular latch fitting locking device" assembly jig 70 thus promotes efficient assembly of aircraft doors and associated modular locking mechanisms in parallel door assembly lines and in parallel modular locking mechanism assembly lines. This will give an optimized and very short lead time.

Such method for mounting of modular latch fitting locking devices and provided modular latch fitting locking device also promotes cost-effective manufacture of aircraft doors and associated modular locking mechanisms in parallel door manufacture lines and in parallel modular locking mechanism production lines.

The laterally moveable latch bar member may be journaled in a journal bearing structure and may be configured for sliding motion along a first axis transverse to the flight direction of the aircraft.

The latch fitting locking device may be positioned at the side region of the aperture perimeter at the side of the aperture (aircraft door) and thus extends transverse the prolongation of the fuselage structure below the aperture.

A door sill structure or door frame structure may be mounted adjacent and at the side of the aperture for strengthening the fuselage structure around the aperture and thus the fuselage structure at the side of the aperture.

The door sill structure or door frame structure may comprise the journal bearing structure and also the laterally moveable latch bar member, entirely or parts thereof.

A portion of the door sill structure may partly or entirely be configured as the journal bearing structure.

The laterally moveable latch bar member (modular movable latch members 1015) may be positioned and may be configured for sliding motion in the journal bearing structure.

The door structure is thus configured to be latched and locked (i.e. secured) to the fuselage structure. Weight is saved in designing the door frame structure by adding additional strength to the door frame structure by means of the mounting of the attached laterally moveable latch bar member to the door frame structure. The door frame structure can thus be made lighter, taking into account that also the laterally moveable latch bar member and/or the journal bearing structure being structural.

Fig. 13 illustrates a work station WS (not being claimed) of an aircraft assembly line 93. The aircraft assembly line 93 is determined by a manufacturing process and comprises the delivery of and mounting of prefabricated aircraft doors 71 and modular latch fitting locking devices 1013.

A respective first actuator arrangement 17 is associated with each of the modular latch fitting locking devices 1013. The respective first actuator arrangement 17 being moved to the work station WS as well.

An aircraft fuselage (body) structure 1001 of a semi-finished aircraft 1003 is subject to assembly in the aircraft assembly line 93. In the manufacturing process different parts are added to the aircraft fuselage structure 1001. The prefabricated aircraft doors 71, being delivered and moved to the work station WS, are mounted to the aircraft fuselage (body) structure 1001 in one sequence. The prefabricated aircraft doors 71, the modular latch fitting locking devices 1013 and the first actuator arrangements 17 are moved to the work station are stored in area AA before mounting.

A selected modular latch fitting locking device 1013 is mounted to the aircraft fuselage (body) structure 1001. The modular latch fitting locking device 1013 comprises a modular movable latch member (not shown) coupled to and configured to be moved by the first actuator arrangement 17, which also is mounted to the aircraft fuselage (body) structure 1001. The first actuator arrangement 17 is configured to transfer a motion from the first actuator arrangement 17 to the modular movable latch member for providing engagement of the modular movable latch member to a stationary latch fitting arrangement (not shown) of the prefabricated door 71. The prefabricated door 71 is also mounted to the aircraft fuselage (body) structure 1001, i.e. to beforehand mounted hinges (not shown) of the body structure 1001. The prefabricated door 71 is closed and eventually adjustment of the hinges is made for correct swing out performance and correct closing. In closed position, the prefabricated door 71 abuts the aircraft fuselage (body) structure 1001 and workshop personnel (not shown) will lock the stationary latch fitting arrangement of the prefabricated door 71 to the modular movable latch member of the selected modular latch fitting locking device 1013.

Preferably, the modular movable latch member and/or modular latch fitting locking device is/are adjusted relative the body structure for correct locking/latching performance.

Suitably, the stationary latch fitting arrangement is adjusted relative the door structure for correct locking/latching performance.

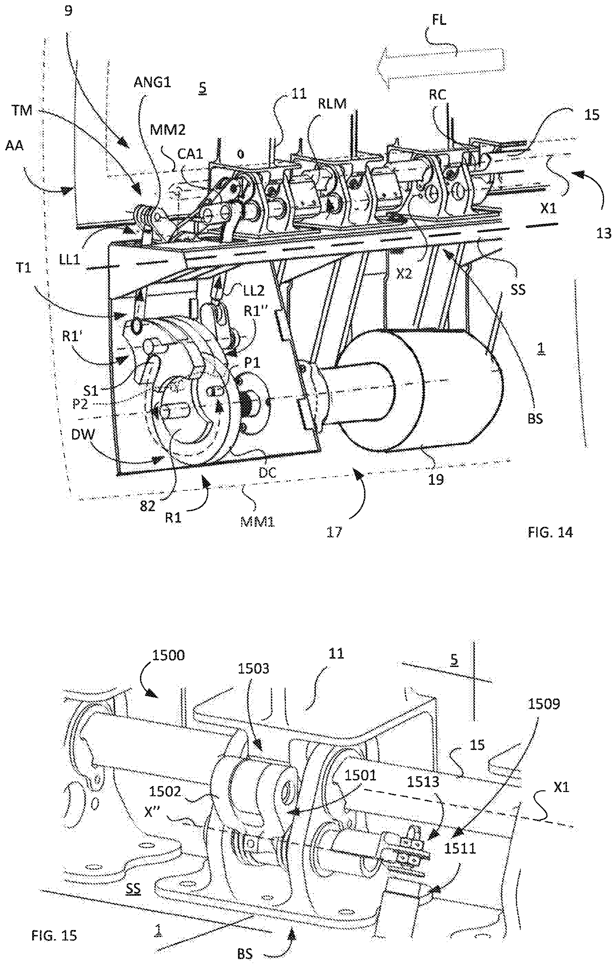

Fig. 14 illustrates a portion of a fuselage structure 1 according to one example. A latch fitting locking device 13 is arranged to an aperture perimeter which may be defined as an area that extends around an aperture AA (door opening) of an aircraft. The aircraft comprises a fuselage structure 1 and a door structure 5, which is configured to be closable arranged in the aperture AA (partly shown and covered by the door structure 5) of the fuselage structure 1.

The aperture perimeter may be defined within a first imaginary line MM1 surrounding the aperture AA. The aperture perimeter may be defined as an area extending between the first imaginary line MM1 and a second imaginary line MM2 running inside an outer edge of the door structure 5.

The latch fitting locking device 13 is part of a locking mechanism 9 also including a latch fitting member 11, which is part of the door structure 5.

The locking mechanism 9 is configured for locking the door structure 5 to the fuselage structure 1 in a closed position.

The latch fitting locking device 13 comprising a laterally moveable latch bar member 15 configured to be moved by a first actuator arrangement 17 for engaging the laterally moveable latch bar member 15 with the latch fitting member 11.

The laterally moveable latch bar member 15 is journaled in a journal bearing structure BS and is configured for sliding motion along a first axis corresponding with the flight direction FD of the aircraft. The latch fitting locking device 13 is positioned at the lower region of the aperture perimeter and thus extends along the prolongation of the fuselage structure 1 below the aperture AA.

A door sill structure SS is mounted adjacent and below the aperture AA for strengthening the fuselage structure 1 around the aperture AA.

The door sill structure SS comprises the journal bearing structure BS and also the laterally moveable latch bar member 15.

The laterally moveable latch bar member 15 is positioned for slidingly motion in the journal bearing structure.

It has been shown that large weight can be saved by designing the door sill structure SS in such a way that the door sill structure SS also comprises the latch fitting locking device 13 (entirely or parts thereof). It has been shown that especially the laterally moveable latch bar member 15 thus extending in the prolongation of the fuselage structure 1 will strengthening the door sill structure SS. In such way the door sill structure per se can be made lighter, still proving a suitable latch fitting locking device for latching the door structure 5 to the fuselage structure 1. The door structure 5 is thus configured to be latched and locked (i.e. secured) to the fuselage structure 1 at the same time as weight is saved by adding additional strength to the door sill structure SS so that the latter can be made lighter.

A second actuator arrangement (not shown) is configured to close and open the door structure 5.

The latch fitting locking device 13 and the first actuator arrangement 17 being mounted to the fuselage structure 1 and the latch fitting member 11 is mounted to the door structure 5.

The first actuator arrangement 17 comprises a translation mechanism T1 comprising a rotary drive part R1 configured to drive a first R1' and second driven part R1", wherein each part being configured to be intermittently and independently driven.

The rotary drive part R1 comprises a drive crank DC of a Geneva mechanism.

The latch fitting locking device 13 is mounted to a lower edge region of the aperture perimeter and extends in the longitudinal direction (flight direction FL) of the aerial vehicle. At least one latch fitting member 11 is arranged at the door structure 5. The aperture perimeter may comprise a portion of the door latch fitting locking device 13. The aperture perimeter may comprise a portion of the stationary latch fitting 11.

However, the important feature is that the latch fitting locking device 13 and the first actuator arrangement 17 is mounted to the body structure 1 and that the stationary latch fitting arrangement 11 being mounted to the door structure 5.

The door latch fitting securing device 13 comprises the laterally moveable latch bar member 15, a rotatable lock member RLM for locking the laterally moveable latch bar member 15 in latching position, a rotary electrical motor 19 and a translation mechanism TM. The rotary electrical motor 19 is configured as a part of the door latch fitting securing device 13.

The laterally moveable latch bar member 15 is configured for linear motion and is configured for engagement with the stationary latch fitting 11 for providing a latched position, when the door structure 5 has been closed to the fuselage skin structure.

The laterally moveable latch bar member 15 is configured to be moved in a direction along a first axis X1 corresponding with the flight direction FD of the aerial vehicle.

The laterally moveable latch bar member 15 comprises a recess RC exposing an engagement surface configured for engagement with the stationary latch fitting 11. The rotatable lock member RLM is configured for rotary motion and engagement with the laterally moveable latch bar member 15 for locking the laterally moveable latch bar member 15 in the latched position. The rotatable lock member RLM is configured to be moved into the recess RC for locking the laterally moveable latch bar member 15 in the latched position. The rotatable lock member RLM may be configured to be rotatable about a second axis X2, which may be arranged parallel to the first axis X1.

The laterally moveable latch bar member 15 is arranged in the lower edge region of the aperture perimeter and is configured to be moved in a direction corresponding with the flight direction FD of the aerial vehicle.

The rotary electrical motor 19 may be directly coupled to the door latch fitting locking device 13 via the translation mechanism TM configured to convert rotary motion of the rotary electrical motor 19 into linear motion of the laterally moveable latch bar member 15 and into rotary motion of the rotatable lock member RLM.

The translation mechanism TM comprises the rotary drive part R1, which is configured to drive the first driven part R1' and which is configured to drive a second driven part R1", each part being configured to be intermittently and independently driven. The rotary drive part R1 comprises a drive wheel DW and is configured as the drive crank DC of a Geneva mechanism. The first driven part R1' is configured as first Geneva output rotary part coupled to the laterally moveable latch bar member 15 and the second driven part R1" is configured as a second Geneva output rotary part coupled to the rotatable lock member RLM.

The drive wheel DW comprises a first elevated circular blocking disc 82 configured to hold the first driven part R1' in a first position during a first holding period, during which first holding period the laterally moveable latch bar member 15 is hold in a first stationary position, even though the drive wheel DW rotates.

The drive wheel DW comprises a second elevated circular blocking disc (not shown) arranged at the other side of the drive wheel DW and configured to hold the second driven part R1" in a second position during a second holding period, during which second holding period the rotatable lock member RLM is hold in a second stationary position, even though the drive wheel DW rotates.

The first elevated circular blocking disc 82 may be formed on a first drive wheel face of the drive wheel and the second elevated circular blocking disc is formed on a second drive wheel face of the drive wheel. The first drive wheel face is opposite the second drive wheel face.

The drive wheel DW comprises a first pin P1 (arranged on the first drive wheel face) configured for engagement with a first slot S1 of the first driven part R1' and comprises a second pin P2 (arranged on the second drive wheel face) configured for engagement with a second slot (not shown) of the second driven part R1". The first pin P1 of the drive wheel DW is configured to enter the first slot S1 and to move the first driven part R1' for providing a first intermittent motion of the first driven part R1' into a first position during the first holding period. The second pin P2 of the drive wheel DW is configured to enter the second slot and to move the second driven part R1" for providing a second intermittent motion of the second driven part R1" into a second position during the second holding period.

The first driven part R1' is coupled to the laterally moveable latch bar member 15 via a first linkage arrangement LL1 and the second driven part R1" is coupled to the rotatable lock member RLM via a second linkage arrangement LL2.

Furthermore, the first driven part R1' may be coupled to a first end of a first push rod and a second end of the first push rod is coupled to a first arm of a first angular lever ANG1. A second arm of the first angular lever may be coupled to the laterally moveable latch bar member 15 via a first intermediate linkage. The second driven part R1" may be coupled to a first end of a second push rod. A second end of the second push rod may be coupled to a crank arm CA1 of the rotatable lock member RLM.

Fig. 15 illustrates an interlock arrangement according to one example and shows a portion of a fuselage structure 1 of an aircraft and a portion of an aircraft door structure 5.

The latch fitting member 11 and the laterally moveable latch bar member 15 are members of an interlock arrangement 1500 configured for latching the door structure 5 to the fuselage structure 1 in a closed position.

The laterally moveable latch bar member 15 is configured to subsequently (when the aircraft door structure 5 is closed or near closed) latch the latch fitting member 11 into a latching position.

The latch fitting member 11 is configured to move with the aircraft door structure 5 making a first motion from an open position to the closed position.

A blocking member portion 1501 of a blocking member 1502 of the interlock arrangement 1500 is configured to block a stop surface (not shown) of the laterally moveable latch bar member 15 for blocking the laterally moveable latch bar member 15 to make a second motion from an unlatching position to the latching position.

The blocking member portion 1501 is configured to be pushed away from the stop surface by means of a pressing portion 1503 of the latch fitting member 11 moved together with the aircraft door structure 5 during the first motion for achieving the closed position, thereby not any longer blocking the laterally moveable latch bar member 15.

The interlock arrangement 1500 thus provides that the laterally moveable latch bar member 15 is blocked to make a sliding motion along a first axis X1 by means of the blocking member 1502 hingedly arranged to the fuselage structure 1.

The blocking member 1502 may be spring biased by means of a tension spring 1505 for providing that the blocking member 1502 will rotate back to the recess (comprising the stop surface) when the pressing portion 1503 of the latch fitting member 11 has leaved the recess in the open position.

The blocking member portion 1501 is arranged to be pushed away from the stop surface of the recess of the laterally moveable latch bar member 15 by means of a pressing portion 1503 of a latch fitting member 11 of the aircraft door structure 5, when it moves into the closed position.

The blocking member 1502 is hingedly coupled about a second axis X", which is arranged in parallel to the first axis X1. The latch fitting member 11 is configured to move with the aircraft door structure 5 making the first motion from the open position to the closed or near closed position, wherein the blocking member portion 1501 is pushed away and the interlock arrangement 1500 is ready to latch by moving the laterally moveable latch bar member 15 along the first axis X1. In Fig. 15 is shown that the blocking member portion 1501 has been pushed away and has rotated about the second axis X".

The pressing portion 1503 also forms a latch fitting engagement portion of the latch fitting member 11 configured to pass the recess of the laterally moveable latch bar member 15 during the closing sequence pushing away the blocking member portion 1501. The latch fitting engagement portion is configured to engage an engagement section of the laterally moveable latch bar member 15 arranged adjacent the recess. The engagement section is engaged by the latch fitting engagement portion during the second motion toward the latched position.

A sensor unit 1509 comprising a sensor target 1511 of a sensor unit first part and comprising a sensor target detecting unit 1513 of a sensor unit second part may be associated with the blocking member 1502 for indicating a "first body near closed and ready to latch" state or "first body closed and ready to latch" state.

The sensor unit is coupled to a control unit (not shown) which in turn is coupled to a first actuator arrangement (not shown) configured to move the laterally moveable latch bar member 11. The sensor target detecting unit 1513 may be rigidly coupled to the blocking member 1502 and the sensor target 1511 may be rigidly coupled to the fuselage structure 1.

The sensor unit 1509 is configured to detect that the blocking member portion 1501 has been pushed away from the stop surface, wherein the sensor target detecting unit 1513 has been rotated (together with the blocking member 1502) into a position facing the sensor target 1511.

A signal is generated by the sensor unit 1509 indicating that the blocking member portion 1501 has been pushed away, which signal is fed to the control unit, which commands the first actuator arrangement to move the laterally moveable latch bar member 15 into the latching position.

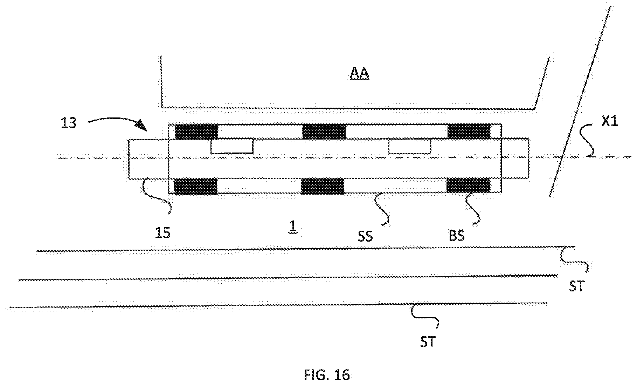

Fig. 16 illustrates a further example of a latch fitting locking device 13. The latch fitting locking device 13 comprising the laterally moveable latch bar member 15 may be configured to be moved by a first actuator arrangement (not shown) for engaging the laterally moveable latch bar member 15 with a latch fitting member (not shown) of an aircraft door (not shown).

The laterally moveable latch bar member 15 may be journaled in a journal bearing structure BS and may be configured for sliding motion along a first axis X1 corresponding with the flight direction of the aircraft.

The latch fitting locking device 13 may be positioned at the lower region of the aperture perimeter below the aperture AA (aircraft door) and thus extends along the prolongation of the fuselage structure below the aperture AA.

A door sill structure SS may be mounted adjacent and below the aperture for strengthening the fuselage structure 1 around the aperture AA and thus the fuselage structure 1 below the aperture.

The door sill structure SS comprises the journal bearing structure BS and also the laterally moveable latch bar member 15. A portion of the door sill structure SS thus comprises the journal bearing structure BS.

The laterally moveable latch bar member 15 may be positioned and may be configured for sliding motion in the journal bearing structure BS.

It has been shown that major weight can be saved by designing the door sill structure SS in such a way that the door sill structure SS also comprises the latch fitting locking device 13 (entirely or parts thereof). It has been shown that especially the laterally moveable latch bar member 15, thus extending in the prolongation of the fuselage structure 1, will strengthening the door sill structure SS.

In such way the door sill structure SS per se can be made lighter than prior art door sill structures, at the same time as there is provided a latch fitting locking device 13 for latching the door structure to the fuselage structure 1.

Stringers ST run along the prolongation of the fuselage structure 1 for strengthening the fuselage structure 1. The laterally moveable latch bar member 15 is also arranged in the fuselage structure 1 along the prolongation of the fuselage structure 1 for strengthening the fuselage structure 1.

By arranging the laterally moveable latch bar member 15 along the prolongation of the fuselage structure 1, the laterally moveable latch bar member 15 will add strength to the fuselage structure 1 at the same time as the aircraft door is free from any latch bar or other movable locking or latching mechanism, thus saving weight.

The present invention is of course not in any way restricted to the examples described above, but many possibilities to modifications, or combinations of the described examples, thereof should be apparent to a person with ordinary skill in the art without departing from the basic idea of the invention as defined in the appended claims.

The "body structure" may be called "fuselage structure" of e.g. an aircraft. The "fuselage skin structure" may be called "fuselage structure". The "door structure" may be called "aircraft door structure" or "aircraft door". The "latch fitting arrangement" may be called "latch fitting member". The "movable latch member" may be called "laterally moveable latch bar member". The "stationary latch fitting arrangement may be called "latch fitting member" or "latch fitting arrangement". The definition of "stationary" may mean that the latch fitting arrangement is fixedly mounted to the aircraft door structure. The definition of "interface" may mean an aperture perimeter of an aperture (door opening) of the body structure, which aperture is configured to encompass the door structure in the closed position. The aperture perimeter may be defined within a first imaginary line surrounding the aperture. The aperture perimeter may be defined as an area extending between the first imaginary line and a second imaginary line running inside an outer edge of the door structure. The "first actuator arrangement" may be called "first driven part". The expression "the door sill structure" may be replaced by the expression "the load bearing framework".

## Claims

1. An aircraft fuselage structure (1) of an aircraft (3) and a door structure (5), which door structure (5) is configured to be opened or closed when the aircraft (3) is standing still;
- a locking mechanism (9) is arranged for locking the door structure (5) to the aircraft fuselage structure (1) in a locked state;
- the locking mechanism (9) comprising;
- at least one stationary latch fitting arrangement (11);
- a latch fitting locking device (13) comprising a laterally movable latch bar member (15) configured to be moved by a first actuator arrangement (17) adapted for providing engagement of the laterally movable latch bar member (15) to the at least one stationary latch fitting arrangement (11);
the latch fitting locking device (13) and the first actuator arrangement (17) being mounted to the aircraft fuselage structure (1); the stationary latch fitting arrangement (11) being mounted to the door structure (5), wherein the door structure (5) forms a single door configured to perform single-acting door motion and configured to fully cover a door opening (AA) of the aircraft fuselage structure (1) in closed position; the door structure is a structural part of a container cargo door or a bulk cargo door, **characterized in that** the laterally moveable latch bar member (15) is journaled in a journal bearing structure of a door sill structure (SS); wherein the door sill structure (SS) is mounted adjacent and below the door opening (AA) for strengthening the aircraft fuselage structure (1).

2. The aircraft fuselage structure (1) according to claim 1, **wherein** the movable latch bar member (15) is configured to be secured in said locked state by at least one movable lock member (23) being configured to be moved by a second actuator arrangement (25) for providing engagement with the at least one movable latch bar member (15); the at least one movable lock member (23) is mounted to the aircraft fuselage structure (1).

3. The aircraft fuselage structure (1) according to claim 1 or 2, **wherein** a sensor arrangement (29) is mounted to the aircraft fuselage structure (1) and being configured to detect said locked state.

4. The aircraft fuselage structure (1) according to claim 3, wherein the sensor arrangement (29) comprises a visual detector arrangement.

5. The aircraft fuselage structure (1) according to any of the preceding claims, **wherein** the locking mechanism (9) comprises a modular stationary latch fitting arrangement, which in turn comprises at least one modular and detachable mounted stationary latch fitting (1011).

6. The aircraft fuselage structure (1) according to any of the preceding claims, **wherein** the movable latch bar member (15) is coupled to the first actuator arrangement (17, 46) via a linkage arrangement (41) transferring a motion from the first actuator arrangement (17, 46) to the movable latch bar member (15).

7. The aircraft fuselage structure (1) according to any of the preceding claims, **wherein the** latch fitting locking device (13) of the locking mechanism (9) is a modular latch fitting locking device (13M) comprising at least one modular movable latch bar member (15M), which is detachable mounted to the modular latch fitting locking device (13M).

8. The aircraft fuselage structure (1) according to claim 7, **wherein** the modular latch fitting locking device (13M) entirely or partially constitutes a portion of a load bearing framework (24) of the aircraft fuselage structure (1) near and/or adjacent the interface (7).

## Patentansprüche

1. Flugzeugrumpfstruktur (1) eines Flugzeugs (3) und Türstruktur (5), welche Türstruktur (5) dafür ausgelegt ist, geöffnet oder geschlossen zu werden, wenn das Flugzeug (3) stillsteht;
- ein Verriegelungsmechanismus (9) ist angeordnet zum Verriegeln der Türstruktur (5) an der Flugzeugrumpfstruktur (1) in einem verriegelten Zustand;
- der Verriegelungsmechanismus (9) umfasst
- mindestens eine ortsfeste Riegelpassungsanordnung (11);
- eine Riegelpassungsverriegelungseinrichtung (13) umfassend ein seitlich bewegliches Riegelstangenelement (15), das dafür ausgelegt ist, durch eine erste Betätigungsanordnung (17) bewegt zu werden, die zur Bereitstellung eines Eingriffs des seitlich beweglichen Riegelstangenelements (15) an der mindestens einen ortsfesten Riegelpassungsanordnung (11) ausgelegt ist;
indem die Riegelpassungsverriegelungseinrichtung (13) und die erste Betätigungsanordnung (17) an der Flugzeugrumpfstruktur (1) montiert sind; indem die ortsfeste Riegelpassungsanordnung (11) an der Türstruktur (5) montiert ist, wobei die Türstruktur (5) eine einzelne Tür bildet, die zum Ausführen einer einfachwirkenden Türbewegung ausgelegt ist und zum vollständigen Abdecken einer Türöffnung (AA) der Flugzeugrumpfstruktur (1) in der geschlossenen Position ausgelegt ist; indem die Türstruktur ein Strukturteil einer Containerladungstür oder einer Massenladungstür ist, **dadurch gekennzeichnet, dass** das seitlich bewegliche Riegelstangenelement (15) in einer Zapfenlagerstruktur einer Türschwellenstruktur (SS) durch Zapfen eingesetzt ist; wobei die Türschwellenstruktur (SS) neben und unterhalb der Türöffnung (AA) zur Verstärkung der Flugzeugrumpfstruktur (1) montiert ist.

2. Flugzeugrumpfstruktur (1) nach Anspruch 1, **wobei** das bewegliche Riegelstangenelement (15) dafür ausgelegt ist, im verriegelten zumindest durch mindestens ein bewegliches Verschlusselement (23) befestigt zu werden, welches dafür eingerichtet ist, durch eine zweite Betätigungsanordnung (25) bewegt zu werden zur Bereitstellung eines Eingriffs mit dem mindestens einen beweglichen Riegelstangenelement (15); indem das mindestens eine bewegliche Verschlusselement (23) an der Flugzeugrumpfstruktur (1) montiert ist.

3. Flugzeugrumpfstruktur (1) nach Anspruch 1 oder 2, **wobei** eine Sensoranordnung (29) an der Flugzeugrumpfstruktur (1) montiert ist und dafür ausgelegt ist, den verriegelten Zustand zu detektieren.

4. Flugzeugrumpfstruktur (1) nach Anspruch 3, wobei die Sensoranordnung (29) eine visuelle Detektoranordnung umfasst.

5. Flugzeugrumpfstruktur (1) nach einem der vorgehenden Ansprüche, **wobei** der Verriegelungsmechanismus (9) eine modulare ortsfeste Riegelpassungsanordnung umfasst, die wiederum mindestens eine modulare und abnehmbar montierte ortsfeste Riegelpassung (1011) umfasst.

6. Flugzeugrumpfstruktur (1) nach einem der vorgehenden Ansprüche, **wobei** das bewegliche Riegelstangenelement (15) an der ersten Betätigungsanordnung (17, 46) über eine Anlenkungsanordnung (41) gekoppelt ist, die eine Bewegung von der ersten Betätigungsanordnung (17, 46) an das bewegliche Riegelstangenelement (15) überträgt.

7. Flugzeugrumpfstruktur (1) nach einem der vorgehenden Ansprüche, **wobei die** Riegelpassungsverriegelungseinrichtung (13) des Verriegelungsmechanismus (9) eine modulare Riegelpassungsverriegelungseinrichtung (13M) ist, umfassend mindestens ein modulares bewegliches Riegelstangenelement (15M), das an der modularen Riegelpassungsverriegelungseinrichtung (13M) abnehmbar montiert ist.

8. Flugzeugrumpfstruktur (1) nach Anspruch 7, **wobei** die modulare Riegelpassungsverriegelungseinrichtung (13M) ganz oder teilweise ein Teil eines lasttragenden Rahmens (24) der Flugzeugrumpfstruktur (1) in der Nähe und/oder neben der Schnittstelle (7) ausmacht.

## Revendications

1. Structure de fuselage d'aéronef (1) d'un aéronef (3) et une structure de porte (5), laquelle structure de porte (5) est configurée pour être ouverte ou fermée lorsque l'aéronef (3) est à l'arrêt ;
- un mécanisme de verrouillage (9) est agencé pour verrouiller la structure de porte (5) sur la structure de fuselage d'aéronef (1) dans un état verrouillé ;
- le mécanisme de verrouillage (9) comprenant ;
- au moins un agencement d'ajustement de verrou fixe (11) ;
- un dispositif de verrouillage d'ajustement de verrou (13) comprenant un élément de barre de verrouillage mobile latéralement (15) configuré pour être déplacé par un premier agencement d'actionneur (17) adapté pour fournir une mise en prise de l'élément de barre de verrouillage mobile latéralement (15) à l'au moins un agencement d'ajustement de verrou fixe (11) ;
le dispositif de verrouillage d'ajustement de verrou (13) et le premier agencement d'actionneur (17) étant montés sur la structure de fuselage d'aéronef (1); l'agencement d'ajustement de verrou fixe (11) étant monté sur la structure de porte (5), la structure de porte (5) formant une porte unique configurée pour effectuer un mouvement de porte à action unique et configurée pour recouvrir complètement une ouverture de porte (AA) de la structure de fuselage d'aéronef (1) en position fermée ; la structure de porte faisant partie structurale d'une porte de chargement de conteneur ou d'une porte de chargement en vrac, **caractérisée en ce que** l'élément de barre de verrouillage mobile latéralement (15) est tourillonné dans une structure de palier de tourillon d'une structure de seuil de porte (SS) ; la structure de seuil de porte (SS) étant montée adjacente et au-dessous de l'ouverture de porte (AA) pour renforcer la structure de fuselage d'aéronef (1).

2. Structure de fuselage d'aéronef (1) selon la revendication 1, **dans laquelle** l'élément de barre de verrouillage mobile (15) est configuré pour être fixé dans ledit état verrouillé par au moins un élément de verrouillage mobile (23) configuré pour être déplacé par un deuxième agencement d'actionneur (25) pour fournir une mise en prise avec l'au moins un élément de barre de verrouillage mobile (15) ; l'au moins un élément de verrouillage mobile (23) est monté sur la structure de fuselage d'aéronef (1).

3. Structure de fuselage d'aéronef (1) selon la revendication 1 ou 2, **dans laquelle** un agencement de capteur (29) est monté sur la structure de fuselage d'aéronef (1) et étant configuré pour détecter ledit état verrouillé.

4. Structure de fuselage d'aéronef (1) selon la revendication 3, dans laquelle l'agencement de capteur (29) comprend un agencement de capteur visuel.

5. Structure de fuselage d'aéronef (1) selon l'une quelconque des revendications précédentes, **dans laquelle** le mécanisme de verrouillage (9) comprend un agencement d'ajustement de verrou fixe modulaire qui, à son tour, comprend au moins un ajustement de verrou fixe modulaire et monté de manière amovible (1011).

6. Structure de fuselage d'aéronef (1) selon l'une quelconque des revendications précédentes, **dans laquelle** l'élément de barre de verrouillage mobile (15) est couplé au premier agencement d'actionneur (17, 46) via un agencement de liaison (41) transférant un mouvement du premier agencement d'actionneur (17, 46) à l'élément de barre de verrouillage mobile (15).

7. Structure de fuselage d'aéronef (1) selon l'une quelconque des revendications précédentes, **dans laquelle** le dispositif de verrouillage d'ajustement de verrou (13) du mécanisme de verrouillage (9) est un dispositif de verrouillage d'ajustement de verrou modulaire (13M) comprenant au moins un élément de barre de verrouillage mobile modulaire (15M) qui est monté de manière amovible sur le dispositif de verrouillage d'ajustement de verrou modulaire (13M).

8. Structure de fuselage d'aéronef (1) selon la revendication 7, **dans laquelle** le dispositif de verrouillage d'ajustement de verrou modulaire (13M) constitue entièrement ou partiellement une partie d'une structure de support de charge (24) de la structure de fuselage d'aéronef (1) à proximité de l'interface (7) et / ou adjacente à celle-ci.
